# EUROPEAN PATENT APPLICATION

(11) **EP 4 365 654 A1**
(43) Date of publication of application: **08.05.2024**
(21) Application number: 22205302.7
(22) Date of filing: 03.11.2022
(51) Int. Cl.: G02B 6/42, B23K 26/00

(54) **OPTICAL COUPLING DEVICE WITH DUST TRAP**

(71) Applicant: Raylase GmbH, 82234 Wessling (DE)
(72) Inventor: Ghadimi, Reza, 82229 Seefeld (DE)
(74) Representative: Araujo Edo, Mario

(57) **Abstract**

The invention refers to an optical fiber coupling device (10) comprising a protection mechanism (20) comprising a deformable element (22) configured for deforming to receive therethrough an optical fiber connector (50), when the optical fiber connector (50) is coupled to a coupling mechanism (16) of the optical fiber coupling device (10), such that the deformable element (22) surrounds the optical fiber connector (50) and covers a portion of a cross-section of an axial channel (14) of the optical fiber coupling device (10) around the optical fiber connector (50). The invention further refers to an optical module (60) for laser-processing a workpiece (80) comprising such an optical fiber coupling device (10).

## Description

### FIELD OF THE INVENTION

The present invention is in the field of optical fiber connection devices. In particular, the invention refers to an optical fiber coupling device for safely establishing an optical connection with an optical module and to an optical module incorporating such optical fiber coupling device.

### BACKGROUND OF THE INVENTION

Optical modules for laser-processing a work piece using a laser beam typically comprise a housing, in which a focusing system and a deflection unit may be comprised for controlling and steering the laser beam. The laser light of the laser beam used by the optical module for laser-processing the work piece is typically transmitted to a proximity of the optical module using an optical fiber and then fed into the optical module via an optical fiber connector, such as QBH connector.

In order to minimize undesired contamination of the optical components arranged within the housing of the optical module, which may for example occur in the form of particles, dust or smoke, the housing of the optical module may be tightly isolated from an environment. Light transmission between the interior and the exterior of the housing may take place through laser-transparent windows arranged at each laser input and at each laser output. For example, a laser transparent window, such as glass plate, maybe arranged between the deflection unit and the underlying work field and may allow a working beam coming from the deflection unit to reach the working field. A further laser transparent window, which may also be or comprise a glass plate, may be configured for allowing laser light fed into the housing by an optical fiber connector to reach an interior of the housing of the optical module, in particular the focusing system and the deflection unit.

An optical module may comprise an input optical port with a coupling mechanism for coupling an optical fiber connector allowing laser light received from an optical fiber coupled to the optical module via the corresponding optical fiber connector, such as QBH connector, to be transmitted to the interior of the housing.

When an optical fiber connector is coupled to the coupling mechanism of an input optical port of an optical module, the optical paths of the optical fiber connector and of the input optical path to be connected must typically be exposed to the environment for some time. Therefore, there exists a risk that particles from the environment or debris particles resulting from friction and mechanical abrasion during the coupling process itself may access the optical paths and eventually reach and contaminate optical components arranged downstream, in particular a laser transparent window of the optical module arranged downstream from the input optical port. This can lead to damage or malfunction of such optical components, in particular to an alteration of their optical properties.

For example, when a high-power laser is fed into the optical module through a laser transparent window contaminated with debris particles, the contaminating particles may absorb a part of the laser energy and may hence cause local heat peaks that may cause a modification of the refraction index of the laser transparent window or burnings that may break or even destroy the laser transparent window.

The risk of contamination is especially high if the optical coupling is performed in a mainly vertical orientation of the optical axis (optical feeding from above), since gravity may favour contaminating particles reaching a laser transparent window arranged below the coupling mechanism. A horizontal or oblique orientation may reduce the risk to some extent but it is not implementable in a large number of cases and fails to completely solve the problem of unwanted contamination.

Flows of air and vacuum prove unsuitable for removing contaminating particles from the surface of a laser transparent window of a laser input port of an optical module without uncoupling an optical fiber connector from the laser input port due to strong electrostatic adhesion of the contaminating particles to the laser transparent window caused by the surface roughness thereof.

As a consequence, a laser transparent window arranged at a laser input port of an optical module must be serviced in regular time intervals to clean it or replace it. However, this requires interrupting an optical coupling between an optical fiber connector. This is a time-consuming process during which the optical module being serviced cannot be used, which leads to a reduction in productivity. In addition, this type of servicing involves considerable material and staff costs for optical module operators. Notably, such servicing operations should ideally take place in protected environments, such as a clean room of at least class 7 or in a flow box, in order to avoid further contamination during the servicing, which is however a condition not any optical module operator is in a position of fulfilling.

In EP 4 053 609 A1, the applicant described an optical fiber coupling device for ensuring contamination-free coupling and uncoupling of an optical fiber to an optical module. The device disclosed therein comprises a lid mechanism with an internal lid element for closing and opening an axial channel of the optical fiber coupling device and with an external driver element for magnetically driving the internal lid element. This solution may however be technically involved and costly and may require the use of additional components for checking a state of the lid mechanism in order to avoid inadvertent contamination due to misuse of the lid mechanism.

Therefore, there is room for technical improvement regarding the protection of an optical system from contamination when coupling light from an optical fiber into the optical system at an optical fiber coupling device through an optical fiber connector.

### SUMMARY OF THE INVENTION

Such a technical improvement is provided by the present invention, in particular by an optical fiber coupling device according to claim 1 and by an optical module according to claim 14, which incorporates such an optical fiber coupling device. Preferred embodiments of the invention are defined in the dependent claims.

The invention aims at providing an optical fiber coupling device allowing to reduce a contamination that maybe caused when establishing an optical connection between an optical fiber connector and an optical module for feeding laser light from an optical fiber to the optical module, which overcomes the technical disadvantages mentioned above. As compared to the solution presented in EP 4 053 609 A1, the present invention seeks a solution that is simple and less costly to implement as well as easier to incorporate in existing optical fiber coupling devices.

A first aspect of the invention refers to an optical fiber coupling device that may be or comprise a laser input device for coupling a laser transmission device, such as the aforementioned optical fiber connector, to an optical module, such that laser light transmitted by the laser transmission device is fed into the optical module.

The optical fiber coupling device of the invention comprises a main coupling structure, which may for example comprise or be made of a metallic or plastic material. The main coupling structure may be substantially rotationally symmetrical around a longitudinal axis thereof. Although some structural components may break a strict rotational symmetry, the geometry of the main coupling structure may be such that it mostly exhibits such rotational geometry around its longitudinal axis. The main coupling structure may be or comprise a "housing" of the optical fiber coupling device.

The "axial direction" may refer in the present application to a direction parallel to the axis of rotational symmetry of the main coupling structure, i.e. may be a direction parallel to the longitudinal axis of the main coupling structure. For example, the main coupling structure may have a substantially cylindrical geometry, meaning that in a cross-sectional plane perpendicular to the axial direction, the main coupling structure may have a substantially circular cross-section. However, other non-symmetric configurations of the main structure are also possible within the context of the present invention.

The main coupling structure comprises an axial channel extending through the main coupling structure, in particular from a first axial end to a second axial end. The axial channel may extend substantially parallel to the axial direction of the main coupling structure. The axial channel may provide an optical path through which light can be transmitted across the optical fiber coupling device, in particular totally transmitted. The axial channel may for example define an opening in the material of the main coupling structure through which light can be transmitted. The axial channel may be filled with vacuum, air or a waveguide material. Additionally or alternatively, a waveguide such as a portion of optical fiber, may be received in the axial channel. According to some embodiments, the axial channel may have a diameter of 20 mm or less, preferably of 10 to 17 mm.

The main coupling structure may further comprise fixation means for attaching the optical fiber coupling device to an optical module, for example using screws or the like, in particular such that the optical fiber coupling device of the invention can be used as a laser input port of the optical module. The optical fiber coupling device of the invention may be attached to the optical module such that the second axial end of the axial channel overlaps an input window of the optical module, such that laser light can be fed into the optical module, in particular into a housing thereof, through the optical fiber coupling device.

The main coupling structure further comprises a coupling mechanism for coupling an optical fiber connector thereto such that, when said optical fiber connector is coupled to the coupling mechanism, light from the optical fiber connector can be transmitted through the axial channel. The coupling mechanism may be axially arranged between the first axial end and the second axial end. "Optical connector" may refer herein to any optical component suitable for being arranged at one end of an optical fiber and for optically connecting the optical fiber to a further optical component, in particular with the optical fiber coupling device of the invention. The coupling mechanism may be configured for receiving an optical connector such that an optical axis of the optical fiber connector is aligned with the axial opening of the optical fiber coupling device, such that light can be transmitted, substantially without any losses or reflections, from the optical fiber, through the optical fiber connector and through the axial opening.

The coupling mechanism may be compliant with any of the commercially available optical fiber coupling standards that are known to the skilled person, such as for example QBH or QD. The coupling mechanism may thus preferably be adapted to receive an optical fiber connector based on any of these optical interconnection standards.

The coupling mechanism may be arranged at the first axial end of the axial channel, meaning that the coupling mechanism maybe arranged and/or extends in a proximity of the first axial end of the axial channel, although it needs not be arranged and/or extend precisely at the very first axial end of the actual channel, although this is possible according to some embodiments of the invention. Being arranged "at the first axial end" may in particular imply that the coupling mechanism is arranged and/or extends closer to the first axial end of the actual opening band to the second axial end.

According to the invention, the optical fiber coupling device further comprises a protection mechanism. The protection mechanism comprises a deformable element, in particular a bendable and/or flexible element, configured for deforming, in particular by adaptively deforming and/or bending, to receive therethrough an optical fiber connector, when the optical fiber connector is coupled to the coupling mechanism, such that the deformable element surrounds the optical fiber connector covering a portion of a cross-section of the axial channel around the optical fiber connector. Thus, when an optical fiber connector is coupled with the coupling mechanism of the optical fiber coupling device of the invention, the deformable element of the protection mechanism modifies its shape to adapt to a shape of the optical fiber connector, in particular via form-fitting, allowing the optical fiber connector to extend therethrough while covering, at lest in part, preferably totally or at least mostly, a portion of a cross-section of the axial channel that is not covered by the optical fiber connector. The deformable element may cover at least 70%, preferably at least 80% or at least 90%, or even 100%, of said portion of a cross-section of the axial channel that is not covered by the optical fiber connector.

As long as the optical fiber connector stays coupled with the coupling mechanism, the deformable element remains in a deformed state form-fitting around the optical fiber connector and covering a remaining cross-section of the axial channel. The deformable element maybe deformed, e.g. bent, by direct mechanical action of the optical fiber connector. For example, an optical fiber connector being coupled with the coupling mechanism may enter into direct contact with the deformable element, thereby causing a deformation of a central portion of the deformable element. The optical fiber connector may then extend through the central portion of the deformable element, while a surrounding peripheral portion of the deformable element covers a cross-section of the axial channel between the optical fiber connector received therein and one or more surrounding sidewalls of the axial channel.

The deformable element may in particular be configured to adaptively deform, i.e. to deform and/or bend in a manner adapted to a shape of an optical fiber connector coupled with the coupling mechanism, such that a gap between the optical fiber connector and the deformable element is eliminated or minimized.

"Deformable" may refer herein to an ability of the deformable element to modify its shape without braking, while substantially retaining its main physical properties. In particular "bending" maybe a form of "deforming" within the context of the present invention. When the deformable element deforms, some portions of the deformable element may modify its position in space, while other portions of the deformable element may retain its position in space. In contrast, simply moving, swivelling or rotating, wherein an object changes its orientation and/or position in space without substantially modifying its shape, may not constitute a deformation within the context of the present invention.

Thus, when an optical fiber connector is coupled with the coupling mechanism, the deformable element may deform to allow the optical fiber connector to extend therethrough while covering a cross-section of the axial channel that is not occupied by the optical fiber connector itself. The protection mechanism thereby forms a protecting barrier that may prevent contaminating particles liberated during the coupling of the optical fiber connector to the coupling mechanism to be transmitted downstream and to possibly reach further optical components, in particular a laser transparent window of an optical module to which the optical fiber coupling device of the6nventtion may be optically connected as a laser input port.

When coupling an optical fiber connector with the coupling mechanism of the optical fiber coupling device of the invention, any potentially contaminating particles liberated by friction between the optical fiber connector and the coupling mechanism, or at least most of them, will be trapped by the protection mechanism, in particular by the deformable element thereof that covers a portion of a cross-section of the axial channel around the optical fiber connector, and will hence not be transmitted downstream from the protection mechanism.

The optical fiber coupling device of the invention hence provides a solution allowing to considerably reduce contamination caused when establishing an optical connection between an optical fiber connector and the optical fiber coupling device, for example for feeding laser light from an optical fiber to an optical module, which overcomes the technical disadvantages of the prior art mentioned above. The protection mechanism according to the invention can be a structurally simple component allowing to achieve the advantages of the invention in all kinds of optical fiber coupling devices, including existing ones, without negatively affecting optical processes and with reduced costs.

As a consequence, the optical fiber coupling device of the invention allows for larger servicing intervals in an optical module, in particular for replacing a laser transparent window arranged at a laser input of the optical module, to which the optical fiber coupling device of the invention may be optically coupled. This in turn allows reducing down time periods of the optical modules. In addition, a number of recalibrations processes, which may be necessary in an optical module any time the optical module is serviced, for example for replacing or cleaning a laser transparent window, in order to ensure high quality and precision, may be, reduced in view of the longer servicing intervals.

Further, since the protection mechanism implements its contamination-prevention function without optically interfering without any optical component, no optical processes are affected by the presence of the protection mechanism, for which high laser quality and product precision can be achieved with longer production cycles.

A further advantage of the present invention is that, since the protection mechanism, in particular the deformable element, may operate by direct mechanical interaction with an optical fiber connector coupling to the coupling mechanism, e.g. the optical fiber connector may directly contact and possibly push the deformable element, the optical fiber coupling device of the invention does not require any cross-check system. Thus, corresponding electronic components such as sensors may be unnecessary.

In other words, the present invention may refer to a laser input device for coupling a laser transmission device to an optical module such that laser light transmitted by the laser transmission device is fed into the optical module, wherein the laser input device comprises: a housing defining an axial channel therethrough from a first axial end to a second axial end, a coupling mechanism for coupling a laser transmission device thereto such that, when said laser transmission device is coupled to the coupling mechanism, light from the laser transmission device can be fed to the optical module through the axial channel; and a deformable protection element configured for receiving therethrough said laser transmission device, when said laser transmission device is coupled to the coupling mechanism, form-fitting to the laser transmission device and filling a cross-section of the axial channel around the optical fiber connector. The deformable protection element prevents contaminating particles liberated in a coupling operation for coupling the laser transmission device to the coupling mechanism from reaching and/or being transmitted downstream past the second axial end. The deformable protection element may fill said cross-section of the axial channel around the optical fiber connector between the coupling mechanism and the second axial end, i.e. in an axial position or region axially arranged between the coupling mechanism and the second axial end. The deformable protection element may be bendable for receiving therethrough said laser transmission device when said laser transmission device is coupled to the coupling mechanism.

According to preferred embodiments, the deformable element may cover said portion of the cross-section of the axial channel around the optical fiber connector in a region of the axial channel axially arranged between the coupling mechanism and the second axial end of the axial channel. This way, the protection mechanism may allow preventing any contaminating particles liberated during a coupling of an optical fiber connector with the coupling mechanism from reaching or advancing past the second axial end of the axial channel. For example, the deformable element may be plane and may be arranged perpendicular to the axial channel in said region of the axial channel. However, other non-planar configurations of the deformable element may be possible within the context of the present invention.

According to some embodiments, the deformable element may comprise or be made of a fibrous material, i.e. a material comprising or made of a plurality of fibers, in particular microfibers. The fibrous material may preferably be a polymeric material, more preferably a material made of or comprising polyester fibers. The fibrous material may in particular be a porous fibrous material, wherein "porous" may refer herein to the presence of pores, voids or gaps among the material fibers, in particular in the microscopic range. This material composition may render the deformable element of the invention particularly suitable for trapping therein potentially contaminating particles that may be liberated during a coupling between the coupling mechanism and an optical fiber connector, for example due to mechanical friction, since such particles may also be in the microscopic or nanoscopic range. For example, if the coupling mechanism comprises a bayonet mechanism, a snap mechanism or a click mechanism, a mechanical friction between the coupling mechanism and the optical fiber connector during the coupling and/or during uncoupling may liberate a number of material particles that could contaminate optical components located downstream from the coupling mechanism. As a non-limiting example, the material particles may have sizes from 10 µm to 100 µm. However, the access of such material particles to the optical components located downstream from the coupling mechanism is prevented by the protection mechanism. In particular, the material particles can be trapped among the fibers of the fibrous material, for example in said voids or gaps formed by the fibers.

The deformable element may be a membrane-like element. Additionally or alternatively, the deformable element may comprise or be made of an elastic material.

In preferred embodiments, the deformable element may comprise or be made of a material thermally stable at temperatures of 70°C or more, preferably 90°C or more. As a consequence, the deformable element may be able to withstand a heating of an optical fiber connector during operation, which may be in direct physical contact with the deformable element, with the deformable element form-fitting around the optical fiber connector. "Thermally stable" at a particular temperature may refer herein to the ability of a material to withstand such particular temperatures without undergoing significant changes in the physical properties thereof.

According to preferred embodiments, the protection mechanism may be arranged within the main coupling structure. Preferably, the protection mechanism may be completely arranged within the main coupling structure. The protection mechanism may be isolated from an exterior of the main coupling structure. Thus, the protection mechanism may be arranged in an interior of the main coupling structure being tightly isolated from an exterior thereof to avoid uncontrolled contamination by particles, smoke, humidity and/or dust.

For example, the protection mechanism may be attached or attachable to an interior wall of the axial channel, preferably removable attached or attachable. The main coupling structure, in particular the interior wall of the axial channel, may comprise one or more anchoring features for anchoring the protection mechanism. In some specific examples, one or more interior walls of the axial channel may comprise one or more grooves for anchoring therein the protection mechanism. The protection mechanism may thereby be mounted to the main coupling structure in a manner configured for withstanding mechanical interactions with optical fiber connectors, in particular for a large number of coupling and uncoupling operations between the optical fiber connector and the coupling mechanism, without tearing or breaking.

In preferred embodiments of the invention, the deformable element may be substantially planar, in particular in and unformed state, when the deformable element is not being deformed by any optical fiber connector. This may in particular mean that the deformable element may substantially extend within a plane and may have a thickness in a direction perpendicular to said plane that may be substantially smaller than a length and a width thereof measured in said plane. According to some examples, the deformable element may be a planar disc-shaped deformable element having a diameter of for example 28 mm and a thickness for example from 0.1 mm to 2 mm.

Additionally or alternatively, the deformable element may have a shape matching across-section of the axial channel. "Matching" may refer herein to the fact that the geometric shape and/or cross-section of the deformable element may correspond to a geometry of the cross-section of the axial channel and/or to the fact that a size of the deformable element may be such that the deformable element can cover the cross-section of the axial channel at least in part, preferably to at least 70%, more preferably to at least 80% or 90% or even completely. For example, if the axial channel has a circular cross-section with a diameter of 25 mm, the deformable element may be planar and disc-shaped and may have a diameter of 28 mm, including a peripheral region with a sectional diameter of 3 mm used for anchoring the deformable element to the interior wall of the axial channel, such that, once placed in position, the disc-shaped deformable element covers the circular cross-section of the axial channel substantially completely, when no optical fiber connector is received therethrough. When an optical fiber connector is received therethrough, the disc-shaped deformable element may completely cover a partial cross-section of the axial channel not occupied by the optical fiber connector.

In preferred embodiments of the invention, the deformable element may extend substantially perpendicular to the axial channel. This configuration may allow the deformable element to cover the portion of the cross-section of the axial channel around the optical fiber connector while requiring a minimal surface of the deformable element, and hence also a minimal amount of material. Further, configurations in which the deformable element is arranged perpendicularly to the axial channel, in particular as part of a vertically arranged optical fiber coupling device, may increase the retaining power of the protection mechanism for trapping therein contaminating particles that may fall from the coupling mechanism arranged above the deformable element.

In preferred embodiments of the invention, the deformable element may comprise one or more deformable holes and/or one or more deformable slits configured for deforming for receiving therethrough said optical fiber connector coupled to the coupling mechanism. Said deformable holes and/or slits may allow the deformable element to deform, in particular by bending, more particularly by bending following a direction in which the optical fiber connector penetrates the axial channel, when an optical fiber connector is coupled to the coupling mechanism. For example, in the exemplary case of an optical fiber device coupled to an optical module in a vertical direction and configured for receiving an optical coupling device in a vertical direction, the deformable holes and/or slits may allow the deformable element to bend downwards as the optical fiber connector passes through the deformable element in that direction. Thanks to the one or more deformable holes and/or one or more deformable slits, different portions of the deformable element separated by the one or more deformable holes and/or one or more deformable slits may deform, for example bend, in slightly different directions and or with slightly different orientations, thereby allowing the optical fiber connector to be received through the deformable element, in particular tightly and/or form-fitted.

Preferably, the one or more deformable holes and/or the one or more deformable slits may be symmetrically arranged with respect to the axial channel. For example, the deformable element may comprise a central deformable hole at a central position corresponding to the position of the axial channel and may further comprise a plurality of radial deformable slits extending in a radial direction on the surface of the deformable element and cutting the central deformable point. The one or more deformable holes and/or the one or more deformable slits, which may be formed by laser-cutting the surface of a piece of material, may allow the deformable element to deform (e.g. bend) around an optical fiber connector received therethrough and to form-fit to the optical fiber connector, in particular by widening when the optical fiber connector is coupled with the coupling mechanism. The deformable slits may have a maximal radial distance from a center of the deformable element corresponding to 30% to 70%, preferably 40% to 60% of a radius of the deformable element.

Notably, although the deformable element maybe described as a planar element, meaning that the deformable element may have a planar configuration when it is in a non-deformed state, that same deformable element may have a curved none-planar shape while an optical fiber connector is arranged through the deformable element.

According to some embodiments, the protection mechanism may comprise one or more biasing elements, such as mechanical springs or magnetic biasing elements, configured for providing a restoring force to the deformable element, wherein the restoring force may keep the deformable element in a non-deformed state when no optical fiber connector is coupled to the coupling mechanism. This restoring force may ensure that the covering element covers the cross-section of the axial channel while no optical fiber connector is coupled to the optical fiber coupling device. In the non-deformed state, the deformable element may cover 70% or more, 80% or more or 90% or more of the cross-section of the axial channel, possibly 100% thereof. When an optical fiber connector is coupled to the coupling mechanism, the restoring force may press the deformable element against the optical fiber connector, thereby providing a better gapless covering of the remaining cross-section of the axial channel that is not occupied by the optical fiber connector.

The aforementioned biasing elements may be structurally independent from the deformable element, for example in the form of external mechanical or magnetic biasing elements, or may be incorporated therein, for example in embodiments in which the deformable element may be made of an elastic material and the restoring force may be provided by the elasticity of the deformable material, in particular when the deformable material is deformed by an optical fiber connector coupled to the coupling mechanism.

In preferred embodiments of the invention, the deformable element may comprise one or more layers of material arranged on top of each other. The deformable element may hence be or comprise a stack of layers of material, which may possibly be independently manufactured. At least one layer of the one or more layers of material may be rotated around the axial channel with respect to another one of the layers of the one or more layers of material. As a consequence, a fibrous and/or porous structure of the one or more layers may be rotated with respect to each other, whereby the deformable element may be able to trap a larger number of contaminating particles.

In some preferred embodiments, a first layer of the one or more layers of material may comprise one or more first deformable holes and/or one or more first deformable slits configured for deforming, for example bending, for receiving therethrough said optical fiber connector coupled to the coupling mechanism and a second layer of the one or more layers of material may comprises one or more second deformable holes and/or one or more second deformable slits configured for deforming for receiving therethrough said optical fiber connector coupled to the coupling mechanism. The first layer and the second layer may be rotated with respect to each other, such that the one or more first deformable holes and/or one or more first deformable slits may be rotated with respect to the one or more second deformable holes and/or one or more second deformable slits. As a result, a form-fitting of the deformable element around said optical fiber connector may be tighter, and the protection element may provide improved protection and cover a greater portion of an axial cross-section of the axial channel, in particular around the optical fiber connector. According to some examples, the first layer and the second layer, and the deformable holes and/or deformable slits thereof, may be rotated with respect to each other by an angle from 15° to 45°.

In some embodiments of the invention, the main coupling structure may comprise a first structure body and a second structure body removably attached or removably attachable to the first structure body. The first and second structure bodies may respectively correspond to first and second axial portions of the main coupling structure. The protection mechanism, in particular the deformable element, maybe arranged or arrangeable between the first structure body and the second structure body. The first axial end of the axial channel may be arranged at the first structure body and the second axial channel may be arranged at the second structure body. A first portion of the axial channel may be arranged in the first structure body and a second portion of the axial channel may be arranged in the second structure body. When the first structure body and a second structure body are attached to each other, the axial channel may be formed and the protection mechanism, in particular the deformable element, may be axially arranged or sandwiched between the first structure body and the second structure body. By being formed by two removable or detachable structure bodies, the main coupling structure may advantageously allow accessing the interior thereof, for example for carrying out maintenance and replacement tasks, for instance upon the protection element. For example, the interior of the main coupling structure may be accessed for replacing or cleaning the deformable element by separating the first and second structure bodies. The first structure body and the second structure body may be removably attached to each other by means of appropriate removable attachment means such as screws or the like.

In embodiments in which the protection mechanism, in particular the deformable element, may be arranged between the first structure body and the second structure body, when the first and second structure bodies are mutually attached, the first and second structure bodies need not be completely separated from each other by the deformable element. Some portions of the first structure body and the second structure body may be mutually separated by the deformable element, while other portions of the first structure body and the second structure body need not be mutually separated by the deformable element and may possible by in contact with each other. However, in other related embodiments, the main structure may be monolithic.

A further aspect of the present invention refers to an optical module for laser-processing a workpiece comprising one or more optical fiber coupling devices according to any of the previously described embodiments o the first aspect of the invention. At least one laser beam may enter the optical module through each of the one or more optical fiber coupling devices. The one or more optical fiber coupling devices maybe used as a laser input device for coupling a laser transmission device to the optical module, for example in a vertical orientation, in a tilted orientation or in a horizontal orientation.

The optical module may further comprise at least one laser focusing system for focusing the at least one laser beam to laser-process the workpiece and/or at least one laser deflection system for deflecting the at least one laser beam to laser-process the workpiece. The at least one laser deflection system may in particular comprise movable mirrors, such as an XY-mirror pair for deflecting the at least one laser beam. The at least one laser focusing system may in particular comprise fixed and/or movable lenses for focusing the at least one laser beam in order to laser-process the workpiece.

The optical module may comprise one or more protection windows through which said at least one laser beam may enter the optical module, wherein the protection mechanism of the one or more optical fiber coupling device may be arranged between the respective coupling mechanism and the respective protection window. The protection mechanism may thereby be configured for protecting the respective protection window from being contaminated by contaminating particles that may be liberated during a coupling operation for coupling an optical fiber connector to the coupling mechanism of the optical fiber coupling device.

### BRIEF DESCRIPTION OF THE DRAWINGS

- Fig. 1: shows a cross-sectional side view of an optical fiber coupling device according to embodiments of the invention, in a state in which no optical fiber connector is coupled with a coupling mechanism of the optical fiber coupling device.
- Fig. 2: show a schematic isolated top view of the deformable element of the optical fiber coupling device of Fig. 1.
- Fig. 3: show a schematic isolated side view of the deformable element of the optical fiber coupling device of Fig. 1.
- Fig. 4: shows a cross-sectional side view of the optical fiber coupling device of Fig. 1 in a state in which an optical fiber connector is coupled with a coupling mechanism of the optical fiber coupling device.
- Fig. 5: shows a schematic top view of a cross-sectional plane of the optical fiber coupling device of Fig. 4 showing the cross-section covered by the optical fiber connector and by the deformable element of the optical fiber coupling device.
- Fig. 6: shows a schematic cross-sectional side view of an optical fiber coupling device according to embodiments of the invention, in a state in which no optical fiber connector is coupled with a coupling mechanism of the optical fiber coupling device.
- Fig. 7: shows a schematic cross-sectional side view of an optical module according to the invention.

### DETAILED DESCRIPTION OF PREFERRED EMBODIMENTS

For the purposes of promoting an understanding of the principles of the invention, reference will now be made to a preferred embodiment illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to one skilled in the art to which the invention relates.

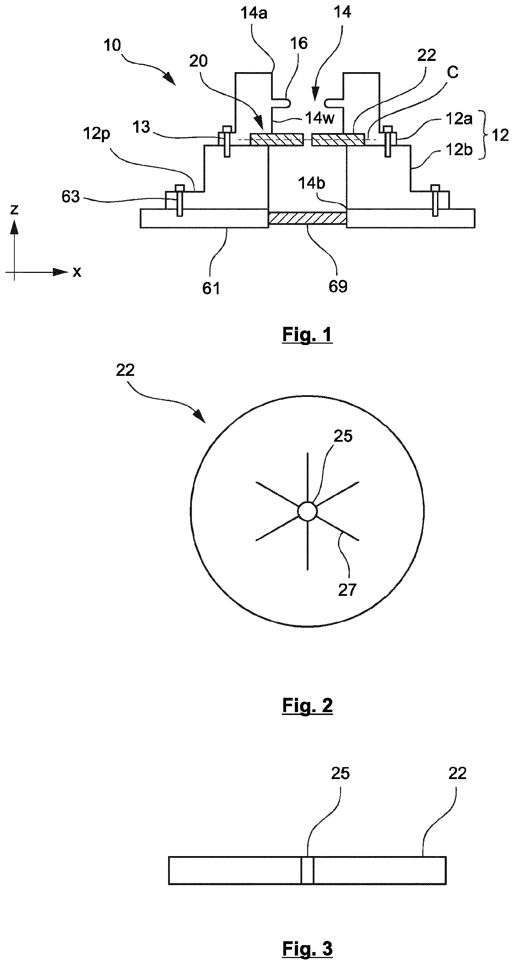

Fig. 1 shows a schematic cross-sectional side view of an optical fiber coupling device 10 according to an exemplary embodiment of the invention. The device 10 comprises a substantially cylindrical main coupling structure 12 made of a metallic material such as aluminium. The main coupling structure 12 comprises an opening that extends therethrough in an axial direction, which in the view shown in Fig. 1 coincides with the vertical z direction, and corresponds to the central axis of revolution symmetry of the substantially cylindrical main coupling structure 12. The opening forms an axial channel 14 that extends through the main coupling structure 12 in the axial direction, from a first axial end 14a to a second axial end 14b. The main coupling structure 12 maybe understood as a housing of the device 10.

In the exemplary embodiment shown in Fig. 1, the main coupling structure 12 comprises a first structure body 12a and a second structure body 12b, which are removably attached to each other, for example by means of screws 13, and correspond to different axial portions of the main coupling structure 12. A first axial portion corresponds to the first structure body 12a, which comprises the coupling mechanism 16 and a first axial portion of the axial channel 14.

The attachment between the first and second structure bodies 12a, 12b is preferably such that the interior of the main coupling structure 12, which may be understood as a housing of the device 10, can be tight with respect to the exterior thereof. In other related embodiments, the main coupling structure 12 may however be monolithically formed.

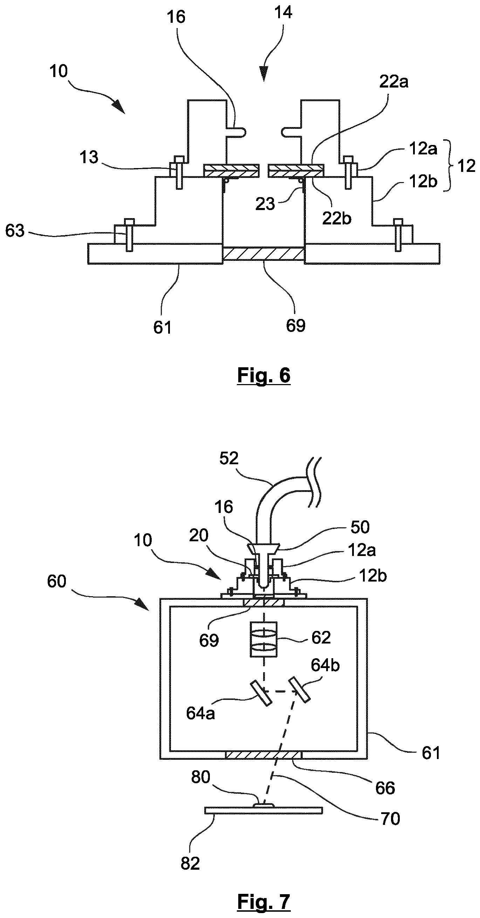

At the second axial end 14b, i.e. at a lowermost position of the main coupling structure 12 in the z direction as seen in Fig. 1, the main coupling structure 12 comprises an optional mounting flange 12p that protrudes radially outwards and can be used for mounting the device 10 to a further optical device, in particular to a housing 61 of an optical module, for example using screws 63 or the like (see e.g. Fig. 7). When the device 10 is mounted to a further optical device, such as an optical module, the device 10 can be used as an input port through which laser light can enter the further optical device, in particular through the axial channel 14. The device 10 is hence arranged over a laser-transparent protection window 69 of the optical module, through which laser light from an optical fiber connector with the device 10 can enter the optical module.

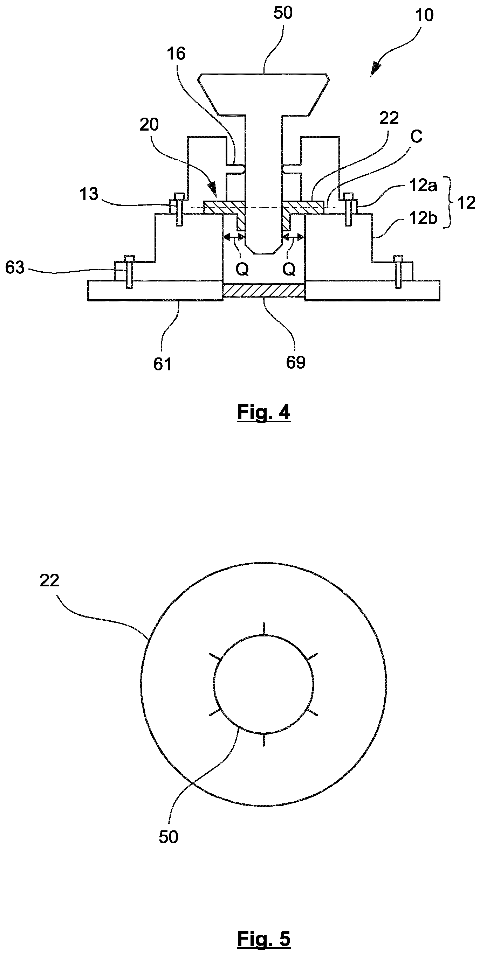

The device 10 comprises a coupling mechanism 16 that is configured for receiving an optical fiber connector 50 (not shown in Fig. 1, but shown in Fig. 4), for example by shape fitting, in order to couple the optical fiber connector 50 to the device 10. In the embodiment shown, the sidewalls of the axial channel 14 comprise, at an axial position closer to the first axial end 14a than to the second axial end 14b, a plurality of protrusions forming the coupling mechanism 16, which can be for example configured as a bayonet mechanism or a as a pin mechanism. When an optical fiber connector 50 having a compliant size and compliant mechanism features is coupled to the coupling mechanism 16, the optical fiber connector 50 is aligned with the axial channel 14 such that light from the optical fiber connector 50 can be optically transmitted through the device 10. In particular, such light can then be transmitted downstream through the axial channel 14 to a further optical component, to which the device 10 can be connected, for example to an optical module.

The coupling between the coupling mechanism 16 and an optical fiber connector 50 may be according with any of the commercially available optical fiber coupling standards, in particular with any of QBH or QD.

The optical fiber coupling device 10 further comprises a protection mechanism 20 that comprises a deformable element 22. The deformable element 22 of the protection mechanism 20 is arranged within the main coupling structure 12 at the interface between the first structure body 12a and the second structure body 12b. Thus, it is possible to access the interior of the main coupling structure 12, for example to replace or clean the deformable element 22, by detaching the first and second structure bodies 12a, 12b, thereby making accessible the interior of the main coupling structure 12.

Fig. 2 shows a schematic top view of the deformable element 22 and Fig. 3 shows a side view of the deformable element 22. In the embodiment shown, the deformable element is a disc-shaped element made of polyester fibers, which is thermally stable at temperatures of over 90°C. The shape of the deformable element 22 matches the shape of a cross-section of the axial channel 14. As seen in Fig. 3, the deformable element 22 has a substantially planar form, with a thickness that is substantially smaller than a diameter thereof.

As seen in Fig. 2, the deformable element 22 comprises a central deformable hole 25 and a plurality of radially extending deformable slits 27 that cross at the central deformable hole 25. The deformable element 22 is hence able to cover different portions of a cross-section of the axial channel 14 depending on whether an optical fiber connector 50 (cf. Fig. 4) is coupled with the coupling mechanism 16 or not (cf. Fig. 1). The deformable slits 27 have a maximal radial distance from a center of the deformable element 22 corresponding to about 50% of a radius of the deformable element 22.

As seen in Fig. 1, the deformable element 22 is axially arranged (in the z-direction) between the axial position of the coupling mechanism 16 and the second axial end 14b. The main coupling structure 12 can optionally have, at an interior side wall 14w thereof, at the interface between the first structure body 12a and the second structure body 12b, a groove or a shoulder configured for receiving and anchoring therein the protection mechanism 20, in particular the deformable element 22. The deformable element 22 can hence be fixed in a mechanically stable, possibly removable, manner within the main coupling structure 12, between the first structure body 12a and the second structure body 12b.

When no optical fiber connector 50 is coupled with the optical fiber coupling device 10 via the coupling mechanism 16, as shown in Fig. 1, the deformable element 22 extends perpendicularly to the axial channel 14 covering for example 90% or more of the cross-section of the axial channel 14.

When an optical fiber connector 50 is coupled with the optical fiber coupling device 10 via the coupling mechanism 16, as shown in Fig. 4, the deformable element 22 is deformed by the optical fiber connector 50 and adapts to the optical fiber coupling device. Thus, when optical fiber connector 50 is coupled with the coupling mechanism 16, the deformation element 22 bends downwards forced by the optical fiber connector, in particular by widening of the deformable hole 25 and of the deformable slits 27 shown in Fig. 2, and form-fittingly surrounds the optical fiber connector of 50 fully or at least mostly covering a portion of the cross-section of the axial channel 14 around the optical fiber connector 50 that is not covered by the optical fiber connector 50 itself, as shown in Fig. 5, which corresponds to the cross-sectional cut-plane C indicated in Fig. 4. A cross-section Q of the axial channel 14 that is not covered by the optical fiber connector 50 that surrounds the optical fiber connector 50 is covered by the deformable element 22.

As a consequence, contaminating particles that may be liberated during the coupling operation, for example due to friction between the coupling mechanism 16 and the optical fiber connector 50, which may in some examples fall downwards due to gravity, are trapped by the protection mechanism 20 and thereby prevented from reaching the second axial end 14b and from thereby contaminating the protection window 69 of an optical module to which the device 10 is connected as a laser input device. When the contaminating particles reach the deformable element 22, they remain trapped in the microscopic voids formed among the fibers of the deformable element 22.

Fig. 6 shows a schematic cross-sectional side view of an optical fiber coupling device 10 according to a related embodiment of the invention. The difference between the device 10 of Fig. 6 and the device 10 described with respect to Figs. 1-5 is that the protection mechanism 20 of the device 10 of Fig. 6 comprises a deformable element 22 that is formed by a plurality of layers of material arranged on top of each other. In the exemplary embodiment shown in Fig. 6, two layers of material arranged on top of each other 22a and 22b are shown, although other related embodiments may have a larger number of layers of material.

Each of the layers of material 22a and 22b is a disc-shaped layer of polyester fibers having the same configuration described with respect to Figs. 2 and 3. However, the first layer of material 22a and a second layer of material 22b are rotated around the axial channel 14 (i.e. about the z-axis) with respect to each other, for example by an angle of 22.5°. Consequently, the deformable slits 27 of the first layer of material 22a are rotated by an angle of 22.5° with respect to the deformable slits 27 of the second layer of material 22b. This allows the protection mechanism 20 of the device 10 shown in Fig. 6 to form-fit to an optical fiber connector 50 coupled with the coupling mechanism 16 in a tighter manner.

A further difference between the device 10 of Fig. 6 and the device 10 described with respect to Figs. 1-5 is that, in the device 10 of Fig. 6, the protection mechanism 20 further comprises a plurality of biasing elements 23, which in the exemplary embodiment shown in Fig. 6 comprise springs configured for providing to the deformable element 22, which comprises the first layer of material 22a and the second layer of material 22b. Due to the restoring force provided by the biasing elements 23, the deformable element 22 is kept in the non-deformed state shown in Fig. 1, in which the deformable element 22 covers a large portion of the cross-section of the axial channel 14, for example 90% or more, in absence of an optical fiber connector 50 coupled to the coupling mechanism 16.

When an optical fiber connector 50 that is coupled with the coupling mechanism 16 is uncoupled and removed from the device 10, the restoring force provided by the biasing elements 23 returns the deformable element 22 to such non-deformed state. Further, when an optical fiber connector 50 is coupled with the coupling mechanism 16, the restoring force provided by the biasing element 23 presses the deformable element 22 against the optical fiber connector 50, thereby providing a tighter and better coverage of the remaining cross-section of the axial channel 14 around the optical fiber connector 50. Further, due to the biasing element 23, the deformable element biasedly "sweeps" a side surface of the optical fiber connector 50 when the optical fiber connector is coupled or uncoupled with respect to the coupling mechanism, thereby removing and trapping any contaminating particles arranged on said surface.

Fig. 7 shows a schematic cross-sectional side view of an optical module 60 according to an embodiment of the invention, which comprises an optical fiber coupling device 10 that is attached to a housing 61 of the optical module 60 by the mounting flange 12p, for example using screws or the like, e.g. the screws 63 shown in Figs. 1-6. In the optical module 60, the optical fiber coupling device 10 acts as a connection port or input port (as a laser input device), by which a laser beam 70 from an optical fiber 52 can be provided into the optical module 60 through the optical fiber coupling device 10. The optical fiber 52 is optically coupled with the optical fiber coupling device 10 by means of an optical fiber connector 50 that is coupled to the coupling mechanism 16 of the optical fiber coupling device 10.

The optical fiber coupling device 10 feeds laser light from the optical fiber 52 into the optical module 60 through a laser-transparent input protection window 69 formed in the housing 61 of the optical module 60. The optical fiber coupling device 10 is attached to the optical module 60, such that the axial channel 14 is aligned with the input protection window 69. Thus, the laser beam 70 enters the optical module 60 through the axial channel 14 of the device 10 and through the protection window 69.

Within the housing 61, the optical module 60 comprises a laser focusing system 62 for pre-focusing the laser beam 70, which laser focusing system 62 may comprise one or more movable lenses, in particular at least two, and possibly one or more fixed lenses. The optical module 60 further comprises a laser deflection system comprising an x-mirror 64a, movable to deflect the laser beam 70 in the x-direction, and a y-mirror 64b, movable to deflect the laser beam 70 in the y-direction. The optical module 60 may further comprise appropriate control electronics (not shown) for controlling the movement and/or settings of the laser focusing system 62 and the mirrors 64a, 64b.

After being focused and oriented by the optical lenses 62 and the movable mirrors 64a, 64b, the laser beam 70 exits the interior of the optical module 60 through an optical window 66 of the optical module 60. The optical window 66 may for example be or comprise a cover glass. The laser beam 70 then reaches a workpiece 80 that is arranged on a work field 82 and laser-processes the workpiece 80, for example during an additive manufacturing processing of the workpiece 80.

As previously explained, the protection mechanism 20 of the optical fiber coupling device 10 protects the protection window 69 of the optical module 60 from being contaminated by contaminating particles that may be liberated during a coupling operation for coupling the optical fiber connector 50 to the coupling mechanism 16 due to mechanical abrasion and/or friction.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

## Claims

1. An optical fiber coupling device (10) comprising:
a main coupling structure (12) comprising:
an axial channel (14) extending through the main coupling structure (12), and
a coupling mechanism (16) for coupling an optical fiber connector (50) thereto such that, when said optical fiber connector (50) is coupled to the coupling mechanism (16), light from the optical fiber connector (50) can be transmitted through the axial channel (14); and
a protection mechanism (20) comprising a deformable element (22) configured for deforming to receive therethrough said optical fiber connector (50), when the optical fiber connector (50) is coupled to the coupling mechanism (16), such that the deformable element (22) surrounds the optical fiber connector (50) and covers a portion of a cross-section of the axial channel (14) around the optical fiber connector (50).

2. The optical fiber coupling device of claim 1, wherein the axial channel (14) extends from a first axial end (14a) to a second axial end (14b), wherein the deformable element (22) covers said portion of the cross-section of the axial channel (14) around the optical fiber connector (50) in a region of the axial channel (14) axially arranged between the coupling mechanism (16) and the second axial end (14b).

3. The optical fiber coupling device of claim 1 or 2, wherein the deformable element (22) comprises or is made of a fibrous material, in particular a porous fibrous material, preferably a polymeric material, more preferably polyester fibers.

4. The optical fiber coupling device of any of the preceding claims, wherein the deformable element (22) comprises or is made of a material thermally stable at temperatures of 70°C or more, preferably 90°C or more.

5. The optical fiber coupling device of any of the preceding claims, wherein the protection mechanism (20) is arranged within the main coupling structure (12), preferably completely arranged therein.

6. The optical fiber coupling device of any of the preceding claims, wherein the protection mechanism (20) is attached to an interior wall of the axial channel (14).

7. The optical fiber coupling device of any of the preceding claims, wherein the deformable element (22) is substantially planar and/or has a shape matching a cross-section of the axial channel (14).

8. The optical fiber coupling device of any of the preceding claims, wherein the deformable element (22) extends substantially perpendicular to the axial channel (14).

9. The optical fiber coupling device of any of the preceding claims, wherein the deformable element (22) comprises one or more deformable holes (25) and/or one or more deformable slits (27) configured for deforming for receiving therethrough said optical fiber connector (50) coupled to the coupling mechanism (16).

10. The optical fiber coupling device of any of the preceding claims, wherein the protection mechanism (20) comprises one or more biasing elements (23) configured for providing a restoring force to the deformable element (22), wherein the restoring force keeps the deformable element (22) in a non-deformed state when no optical fiber connector (50) is coupled to the coupling mechanism (16).

11. The optical fiber coupling device of any of the preceding claims, wherein the deformable element (22) comprises one or more layers (22a, 22b) of material arranged on top of each other, wherein at least one layer (22a) of the one or more layers of material may be rotated around the axial channel with respect to another one of the layers (22b) of the one or more layers of material.

12. The optical fiber coupling device of claim 11, wherein a first layer (22a) of the one or more layers of material comprises one or more first deformable holes (25) and/or one or more first deformable slits (27) configured for deforming for receiving therethrough said optical fiber connector (50) coupled to the coupling mechanism (16) and wherein a second layer (22b) of the one or more layers of comprises one or more second deformable holes (25) and/or one or more second deformable slits (27) configured for deforming for receiving therethrough said optical fiber connector (50) coupled to the coupling mechanism (16), wherein the one or more first deformable holes (25) and/or one or more first deformable slits (27) are rotated with respect to the one or more second deformable holes (25) and/or one or more second deformable slits (27).

13. The optical fiber coupling device of any of the preceding claims, wherein the main coupling structure (12) comprises a first structure body (12a) and a second structure body (12b) removably attached or attachable to the first structure body (12a), wherein the protection mechanism (20) is arranged or arrangeable between the first structure body (12a) and the second structure body (12b).

14. An optical module (60) for laser-processing a workpiece (80) comprising one or more optical fiber coupling devices (10) according to any of the preceding claims, wherein at least one laser beam (70) enters the optical module (60) through each of the one or more optical fiber coupling devices (10).

15. The optical module of claim 14, wherein the optical module (60) comprises one or more protection windows (69) through which said at least one laser beam (70) enters the optical module (60), wherein the protection mechanism (20) of the one or more optical fiber coupling device (10) is arranged between the respective coupling mechanism (16) and the respective protection window (69); and/or
wherein the optical module (60) further comprises at least one laser focusing system (62) for focusing the at least one laser beam (70) to laser-process the workpiece and/or at least one laser deflection system (64a, 64b) for deflecting the at least one laser beam (70) to laser-process the workpiece.
